# EUROPEAN PATENT APPLICATION

(11) **EP 0 617 528 A2**
(43) Date of publication of application: **28.09.1994**
(21) Application number: 94301976.0
(22) Date of filing: 18.03.1994
(51) Int. Cl.: H04K 1/00, H04Q 7/04

(54) **Radio telecommunication apparatus with privacy or non-privacy communication mode**

(30) Priority: 25.03.1993 JP 65844/93
(71) Applicant: KABUSHIKI KAISHA TOSHIBA, Kawasaki-shi, Kanagawa-ken 210 (JP)
(72) Inventor: Obayashita, Arata, c/o Intell.Property Div., Tokyo (JP); Yamashita, Masataka, c/o Intell.Property Div., Tokyo (JP)
(74) Representative: Weitzel, David Stanley

(57) **Abstract**

When the user of a radio telecommunication apparatus requests a privacy mode and a call origination, the apparatus of the present invention sends a call signal including the requested privacy mode to a base station. Thereafter, the apparatus receives an acknowledge signal from the base station, including a designated communication mode designated by the base station. If the received designated communication mode does not correspond to the requested privacy mode, the apparatus warns the user.

## Description

### BACKGROUND OF THE INVENTION

### Field of the Invention

The present invention generally relates to a radio telecommunication apparatus such as a portable telecommunication apparatus or a mobile telecommunication apparatus, and more particularly to a radio telecommunication apparatus using a dual mode by which either an analog mode or a digital mode is selected.

### Description of the Related Art

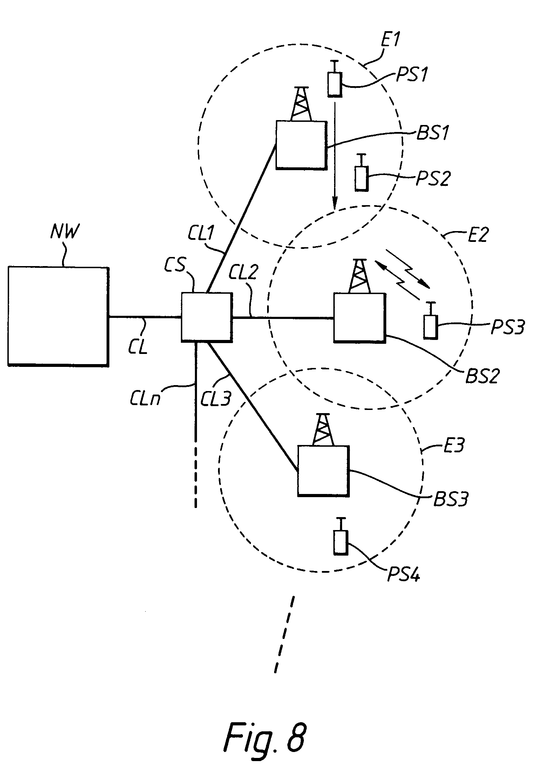

FIG. 8 shows a diagram illustrating a radio telecommunication system. The system includes a control station CS connected to a landline network NW over a landline CL. The control station CS is further connected to plural base stations BS1, BS2, BS3 ... over landlines CL1, CL2, CL3 .... Each base station covers its own radio zone E1, E2, E3, .... Each portable apparatus communicates over radio channels with the base station in the radio zone in which it is located. Further, each portable apparatus is connected to the landline network NW through the base station BS and the control station CS.

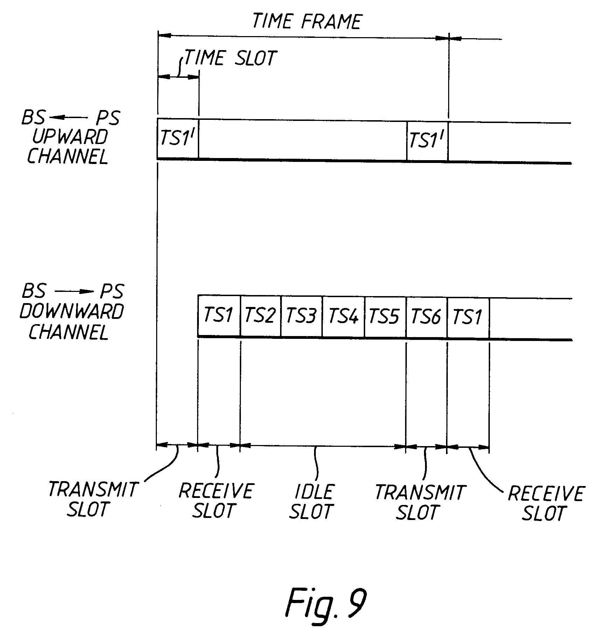

In the digital mode, the system operates as a time division multiple access system, referred to as a TDMA system. In the TDMA system, as shown in FIG. 9, each radio channel for a downward channel and for an upward channel, includes a plurality of time frames. Each time frame includes six time slots. In the event that a communication link is formed between the base station and the portable station, one time slot for the downward signal is assigned from the downward radio channel and one time slot for the upward signal is assigned from the upward radio channel. After that, the portable apparatus receives the downward signal in the assigned downward slot and sends the upward signal in the assigned upward slot. As shown in FIG. 9, if the portable apparatus PS is assigned TS1' as an upward slot, the portable apparatus PS sends the intermittent upward signal to the base station BS during a period corresponding to the upward slot TS1'. Furthermore, if the portable apparatus is assigned TS1 as a downward slot, the portable apparatus PS receives the downward signal during a period corresponding to a downward slot TS1. Thus, from the perspective of portable apparatus PS, the upward slot TS1' is defined as a transmit slot and the downward slot TS1 is defined as a receive slot. During a period corresponding to the downward slots TS2, TS3, TS4, TS5, the apparatus PS sends no signal to the base station BS. Therefore, the slots corresponding to the slots TS2, TS3, TS4, TS5 are defined as an idle slot. The above six slots TS1 ∼ TS6 repeat in every frame.

Presently, there is more than one type of portable apparatus commercially available. A first type adopts only the analog mode. A second type adopts only the digital mode. A third type adopts the dual mode in which the portable apparatus selectively adopts one of the analog and digital modes.

When making a call, the first type of portable apparatus modulates an analog voice signal. The portable apparatus adds the modulated signals and a carrier signal, and generates a transmit signal. Then, the portable apparatus transmits the transmit signal. The portable apparatus being called receives the transmitted signal, demodulates the received signal, and audibly reproduces the demodulated signal from a speaker of the portable apparatus being called.

When the second type of portable apparatus makes a call, it encodes an analog voice signal and then generates a digital transmit signal. Further, the calling portable apparatus performs an error correction coding operation on the digital transmit signal and then generates an error correction coded signal. Furthermore, the apparatus modulates the error correction coded signal, adds the modulated signal and a carrier signal, and then generates a transmit signal. Subsequently, the calling portable apparatus transmits the transmit signal.

The portable apparatus being called receives the transmit signal and demodulates the received signal. Further, the called portable apparatus performs an error correction decoding operation on the demodulated signal and then generates a digital receive signal. Furthermore, the called portable apparatus decodes the digital receive signal, and then generates an analog receive signal from a speaker of the portable apparatus being called.

The third type of portable apparatus, which uses the dual mode, selectively adopts one of the analog mode and the digital mode in response to an instruction of the base station or the user of the calling portable apparatus.

There has been developed a fourth type of portable apparatus, which uses a privacy mode having a voice privacy feature which protects the user's communicated voice signal against eavesdropping. When the portable apparatus using the privacy mode makes a call, it encodes an analog voice signal and then generates a digital transmit signal. Further, the calling portable apparatus performs the error correction coding operation on the digital transmit signal, and then generates an error correction coded signal. The calling portable apparatus performs a scrambling operation on the error correction coded signal, and adds the scrambled signal and a carrier signal. Then, the portable apparatus generates and transmits a transmit digital signal. The portable apparatus being called receives the digital transmit signal and demodulates it. Further, the portable apparatus performs a descrambling operation on the demodulated signal. Furthermore, the portable apparatus performs the error correction decoding operation on the descrambled signal, decodes the error correction decoded signal, and generates the decoded voice from the speaker.

Like the portable apparatus, there is presently more than one type of station in use. A first type adopts only the analog mode. A second type adopts only the digital mode. A third type adopts the dual mode by which one of the analog and digital modes may be selected. A fourth type selects one of the analog, digital, and privacy modes.

When the user wishes to make a call, the portable apparatus prompts the user to input information as to whether the user requests the portable apparatus to adopt the privacy mode, provided, of course, that the portable apparatus can adopt the privacy mode. In response to the inputted information, the portable apparatus sends a call signal including the user's requesting mode to a base station covering a zone in which the apparatus is located. If the user wishes to utilize the privacy mode and the base station is not capable of adopting the privacy mode, the base station adopts a mode other than privacy mode. As a result, the portable apparatus is also obliged to adopt the mode other than the privacy mode.

Although the user requests the portable apparatus to adopt the privacy mode, the user does not recognize that the portable apparatus and the base station have adopted the mode other than the privacy mode.
Therefore, the user takes it for granted that the portable apparatus and the base station adopt the requested privacy mode. As a result, although the base station and the portable apparatus adopt the mode other than the privacy mode, the user may communicate sensitive matters which should be protected against eavesdropping.

Further, if the portable apparatus communicates with the base station adopting privacy mode, and the user moves the portable apparatus from a zone covered by the base station to another zone covered by another base station, a speech channel is switched to another channel. As a result, another base station communicates with the portable apparatus. However, if the other base station is not capable of adopting the privacy mode, the portable apparatus is obliged to adopt another mode other than the privacy mode.

As a result, the user takes it for granted that the previous privacy mode is maintained after the user moves to another zone. Therefore, the user continues to communicate sensitive matters which should be protected against eavesdropping although the communication mode is changed to the mode other than the privacy mode.

### SUMMARY OF THE INVENTION

Against this background, in accordance with one aspect of the invention, there is provided a radio telecommunication apparatus used in a radio telecommunication system, wherein speech signals are selectively communicated with a base station in either one of a privacy mode or a communication mode other than the privacy mode, the radio telecommunication apparatus comprising, requesting means for requesting the base station to designate the privacy mode, receiving means for receiving a designated communication mode designated by the base station, and warning means responsive to the requesting means and the receiving means for warning the user of the apparatus if the received designated communication mode does not correspond to the requested privacy mode.

Further, in accordance with a second aspect of the invention there is provided a telecommunication apparatus used in a radio telecommunication system, wherein speech signals are selectively communicated with a base station in either one of a privacy mode or a communication mode other than the privacy mode, the radio telecommunication apparatus comprising, receiving means for receiving a mode change indication signal including a designated communication mode from the base station while the speech signals are communicated with the base station in the privacy mode, and warning means responsive to the receiving means for warning the user if the received designated communication mode does not correspond to the privacy mode of the apparatus.

It is to be understood that both the foregoing general description and the following detailed description are exemplary and explanatory and are intended to provide further explanation of the invention as claimed.

### BRIEF DESCRIPTION OF THE DRAWINGS

The accompanying drawings, which are incorporated in and constitute a part of this specification, illustrate several embodiments of the invention and, together with the description, serve to explain the objects, advantages, and principles of the invention. In the drawings,
FIG. 1 is a block diagram illustrating the radio telecommunication apparatus according to the present invention;
FIG. 2 is a block diagram illustrating portions of the radio telecommunication apparatus shown in FIG. 1;
FIG. 3 is a flow chart illustrating an operation sequence in a standby state of the radio telecommunication apparatus according to the present invention;
FIG. 4 is a flow chart illustrating an operation sequence of a first embodiment of the present invention;
FIG. 5 is a system diagram illustrating the operation sequence of the first embodiment of the present invention;
FIG. 6 is a flow chart illustrating an operation sequence of a second embodiment of the present invention;
FIG. 7 is a system diagram illustrating the operation sequence of the second embodiment of the present invention;
FIG. 8 is a system diagram illustrating a radio telecommunication system; and
FIG. 9 is a diagram illustrating the format of upward and downward signals in the TDMA system.

### DESCRIPTION OF THE PREFERRED EMBODIMENTS

Reference will now be made in detail to the present preferred embodiments of the invention, examples of which are illustrated in the accompanying drawings.

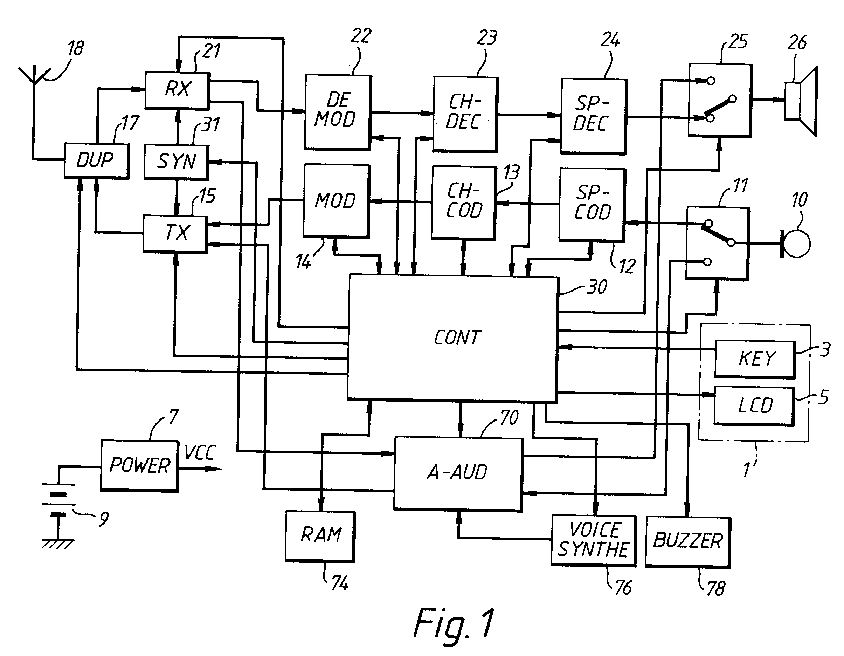

FIG. 1 shows a portable apparatus for use in a radio telecommunication system. The portable apparatus includes a console unit 1, a battery circuit 7, a battery 9, a microphone 10, a transmit audio switch 11, a speech coder 12, a channel coder 13, a modulator 14, a transceiver 15, a duplexer 17, an antenna 18. The portable apparatus further includes a receiver 21, a demodulator 22, a channel decoder 23, a speech decoder 24, a receive audio switch 25, a speaker 26, a controller 30, a synthesizer 31, an analog audio circuit 70, a RAM 74, a voice synthesizer 78.

The console unit 1 is connected to control circuit 30 and has a keypad 3 and an LCD display 5. The keypad 3 includes a DIAL key, a SEND key, an END key, a FUNCTION key and a mode request key.

When the user operates the mode request key, the user designates one of an analog mode, a digital mode, and a dual mode in which the user permits the base station to select either one of the analog mode or the digital mode. Furthermore, the user may designate the privacy mode by operating the FUNCTION key and the mode request key.

The battery circuit 7 converts an output voltage of the battery 9 to a predetermined voltage and supplies the converted voltage to each component of the portable apparatus.

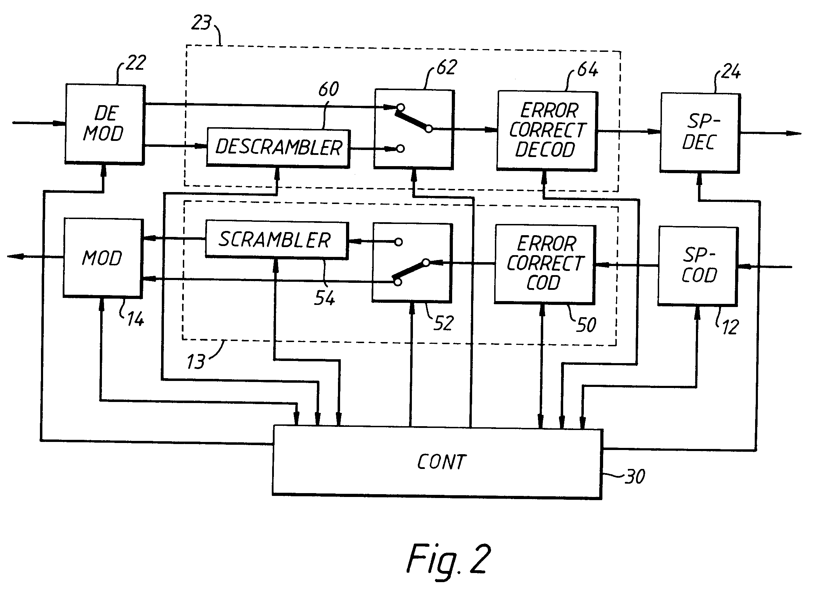

When the digital mode is requested by the user or the base station, the control circuit 30 causes the transmit audio switch 11 to connect the microphone 10 to the speech coder 12. In a digital mode, the microphone 10 generates a transmit audio signal to the transmit audio switch 11 connected to the speech coder 12. The speech coder 12 performs a coding operation on the transmit audio signal and outputs the coded transmit signal to the channel coder 13. Referring to FIG. 2, the channel coder 13 includes an error correction coder 50, a coding switch 52, and a scrambler 54. In the digital mode, the control circuit 30 causes the coding switch 52 to connect the error correction coder 50 to the digital modulator 14. The error correction coder 50 performs its error correction coding operation on the coded transmit signal provided by the speech coder 12 and on a digital control signal provided by the control circuit 30 and supplies the error correction coded transmit signal to the digital modulator 14. Referring again to FIG. 1, the digital modulator 14 modulates the error correction coded transmit signal issued from requesting means and the receiving means the channel coder 13 and supplies a digital modulated signal to the transceiver 15. The transceiver 15 adds the digital modulated signal received from the digital modulator 14 and a carrier signal received from the synthesizer 31 to perform frequency conversion, amplifies the frequency converted signal to a predetermined level, and provides a transmit signal to the duplexer 17.

The duplexer 17 is turned ON only for a period of time corresponding to the transmit slot designated by the control circuit 30. During this period, the duplexer 17 receives the transmit signal from the transceiver 15 and supplies the transmit signal to the antenna 18. The transmit signal is transmitted toward a base station (not shown) in the form of a radio transmit signal.

The antenna 18 receives a radio signal from the base station and outputs a receive signal to the duplexer 17. The duplexer 17 is turned ON only for a period of time corresponding to the receive slot designated by the control circuit 30. During this period, the duplexer 17 receives the receive signal and outputs the receive signal to the receiver 21. The receiver 21 performs its frequency converting operation on the receive signal in accordance with a signal from the synthesizer 31 and outputs a frequency converted receive signal to the digital demodulator 22. The signal from the synthesizer 31 is designated by the control circuit 30. The digital demodulator 22 performs bits and frame synchronizing operation on the frequency converted receive signal from the receiver 21 to obtain a synchronized signal and a digital demodulated signal. The digital demodulator 21 supplies the synchronized signal to the control circuit 30 and supplies the digital demodulated signal to the channel decoder 23.

Referring again to FIG. 2, the channel decoder 23 includes a descrambler 60, a decoding switch 62, and an error correction decoder 64. In the digital mode, the control circuit 30 causes the decoding switch 62 to connect the digital demodulator 22 to the error correction decoder 64. The error correction decoder 64 performs its error correction decoding operation on the digital demodulated signal received from the digital demodulator 22 to obtain a digital receive signal.

Furthermore, the error correction decoder 64 provides a digital control signal for scanning radio channels to the control circuit 30.

Referring to FIG. 1, the digital receive signal issued from the channel decoder 23 is sent to the speech decoder 24. The speech decoder 24 performs its decoding operation on the digital receive signal to provide an analog receive audio signal to the receive audio switch 25. In the digital mode, the control circuit 30 causes the receive audio switch 25 to connect the speech decoder 24 to the speaker 26. The analog audio switch 25 supplies the analog receive audio signal to the speaker 26.

When the privacy mode is designated by the user or the base station, the control circuit 30 causes the coding switch 52 to connect the error correction coder 50 to the scrambler 54. The scrambler 54 scrambles the error correction coded signal received from the error correction coder 50 to protect the communicated radio signal against eavesdropping. The scrambled signal is supplied to the digital modulator 14.

Furthermore, when the privacy mode is designated, the control circuit 30 causes the decoding switch 62 to connect the descrambler 60 to the error correction decoder 64. The descrambler 60 descrambles the digital demodulated signal received from the digital demodulator 22 and supplies a descrambled signal to the error correction decoder 64.

When the analog mode is designated by the user or the base station, the control circuit 30 causes the transmit audio switch 11 to connect the microphone 10 to an analog audio circuit 70. The analog audio circuit 70 modulates the analog transmit audio signal from the microphone 10 and supplies analog modulated signal to the transceiver 15. The transceiver 15 adds the analog modulated signal and a carrier signal received from the synthesizer 31 to perform frequency conversion, amplifies a frequency converted transmit signal to a predetermined level, and provides a transmit signal to the duplexer 17.

Furthermore, the control circuit 30 causes the receive audio switch 25 to connect the analog audio circuit to the speaker 26. The antenna receives a radio signal and provides the received signal to the receiver 21 via the duplexer 17. The receiver 21 performs a frequency conversion operation on the received signal and provides a frequency converted receive signal to the analog audio circuit 70. The analog audio circuit 70 demodulates a frequency converted receive signal provided by the receiver 21 and supplies an analog demodulated receive audio signal to the speaker 26 via the receive audio switch 25.

The RAM 74 stores information including data from the keypad 3. The voice synthesizer 76 generates a synthesized voice to the analog audio circuit 70 in accordance with a control signal from the control circuit 30. The buzzer 78 generates a beep sound in accordance with a control signal from the control circuit 30.

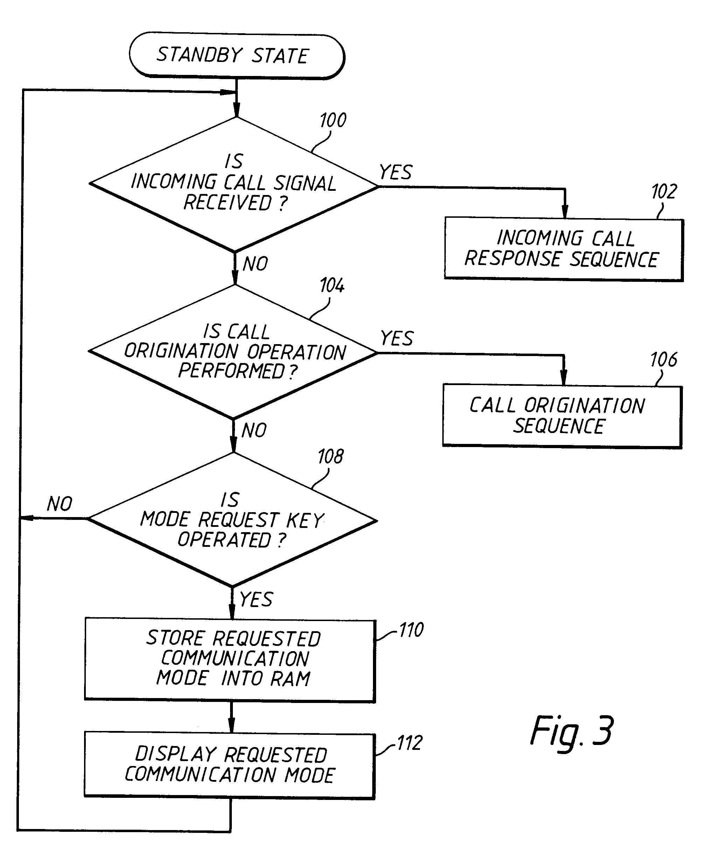

FIG. 3 shows an operation sequence of the portable apparatus in a standby state. The control circuit 30 of the portable apparatus checks whether an incoming call signal from the base station is received (step 100). If the incoming call signal is received, the control circuit 30 performs an incoming call response sequence (step 102). Otherwise, the control circuit 30 checks whether the user of the apparatus has performed a call origination operation (step 104). If the call origination operation is performed, the control circuit 30 performs a call origination sequence (step 106). Otherwise, the control circuit 30 checks whether the user operates the mode request key of the keypad 3 (step 108). If the mode request key is not operated, the above steps are repeated. If the mode request key is operated, the control circuit 30 stores the requested communication mode into the RAM 74 (step 110). After that, the control circuit 30 displays the requested communication mode on the LCD 5 (step 112).

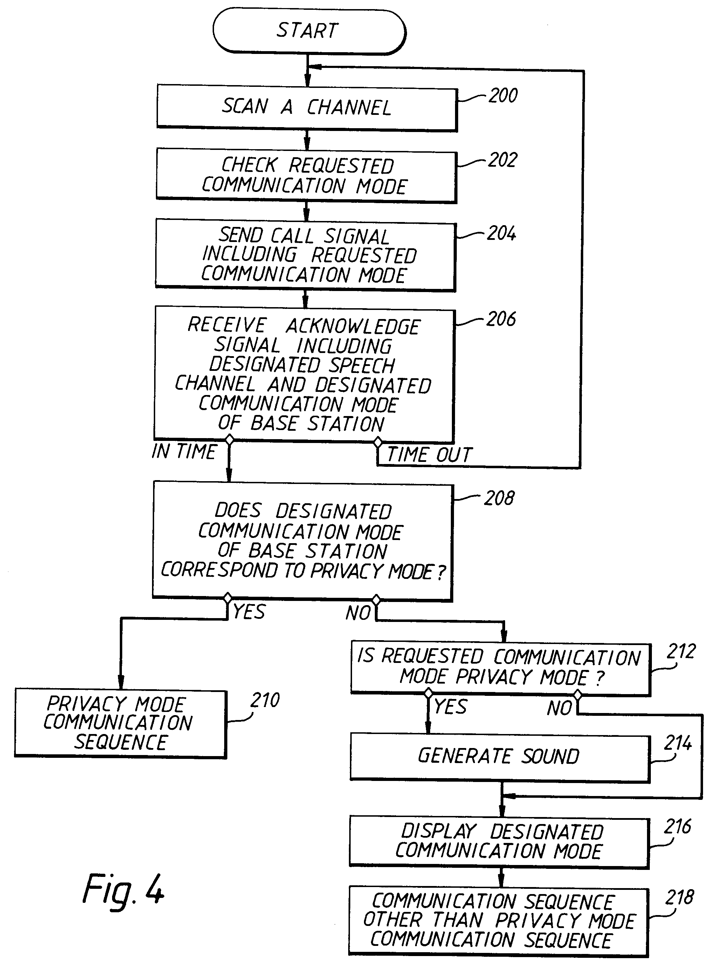

FIG. 4 shows the call origination sequence of step 106 of FIG. 3. The control circuit 30 scans an upward control channel and a downward control channel for communicating with the base station (step 200). The control channel is referred to as A channel. It is noted that the channel includes the slot used in the digital mode or the privacy mode. After that, the control circuit 30 checks the requested communication mode stored into RAM 74 (step 202). Thereafter, the control circuit 30 sends a call signal including the requested communication mode to the base station (step 204). After that, the control circuit 30 checks whether the portable apparatus receives an acknowledge signal from the base station (step 206). The acknowledge signal includes an upward speech channel and a downward speech channel designated by the base station, and a communication mode of the base station. If the base station adopts a communication mode corresponding to the communication mode requested by the user, the base station sends the acknowledge signal including the communication mode corresponding to the requested mode. However, if the base station is not capable of adopting a communication mode corresponding to the requested communication mode, the base station sends the acknowledge signal including a communication mode which the base station is capable of adopting and which does not correspond to the requested communication mode.

If the acknowledge signal is not received during a predetermined period of time in step 206, the above steps are repeated. If the acknowledge signal is received during the predetermined period of time, the control circuit 30 checks whether the received communication mode of the base station corresponds to the privacy mode (step 208).

If the received communication mode corresponds to the privacy mode, the control circuit 30 actuates the coding switch 52 and the decoding switch 62 so that the coding switch 52 connects the error correction coder 50 with the scrambler 54 and the decoding switch 62 connects the descrambler 60 with the error correction decoder 64. Thereafter, the control circuit 30 performs the designated privacy mode communication sequence. That is, the control circuit 30 communicates with the base station over the designated speech upward and downward channels in the designated privacy mode (step 210).

If the received communication mode does not correspond to the privacy mode, the control circuit 30 checks whether the requested communication mode stored in the RAM 74 corresponds to the privacy mode (step 212). If the requested communication mode corresponds to the privacy mode, the control circuit 30 recognizes that the requested privacy mode is not accepted by the base station. Thereafter, the control circuit 30 actuates the buzzer 78. As a result, the buzzer 78 generates an intermittent beep sound for a predetermined period of time in order to urge the user not to communicate sensitive matters since the designated communication mode of the base station is not the requested privacy mode (step 214). If the requested communication mode is not the privacy mode in step 212, or after the step 214, the control circuit 30 displays the designated communication mode on the LCD 5 (step 216) and performs a communication mode sequence other than the privacy mode sequence (step 218). That is, the control circuit 30 communicates with the base station over the designated speech upward and downward speech channels in the designated communication mode other than the privacy mode sequence.

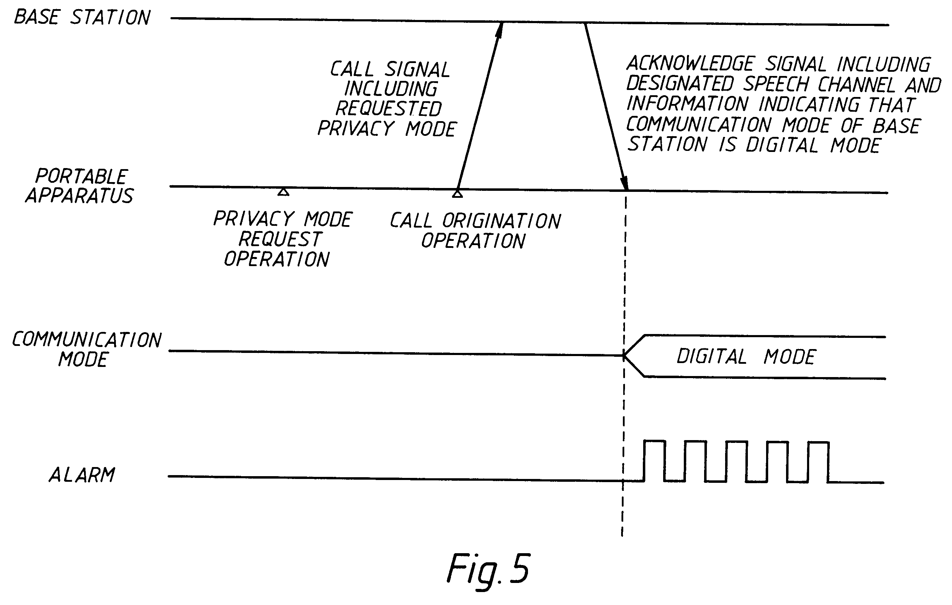

FIG. 5 shows the operations of the portable apparatus and the base station according to the sequence of FIG. 4. Referring to FIG. 5, if the user requests the privacy mode and call origination by operating the appropriate keys of the keypad 3, the control circuit 30 sends the call signal including the requested privacy mode to the base station. However, if the base station is not capable of adopting the privacy mode as a communication mode of the base station and is capable of adopting only the digital mode, the base station sends the acknowledge signal including the designated speech upward and downward channels, and information indicating that the communication mode of the base station is the digital mode, to the portable apparatus. After the portable apparatus receives the acknowledge signal, the control circuit 30 communicates with the base station over the designated speech upward and downward channels in the designated digital mode. At that time, the control circuit 30 actuates the buzzer 78. As a result, the buzzer 78 generates the intermittent beep sound for the predetermined period of time in order to urge the user not to communicate sensitive matters since the designated mode of the base station is not the private mode which was requested by the user.

According to the first embodiment, the user can recognize that the designated mode designated by the base station is not the privacy mode requested by the user by confirming the generated intermittent beep sound in the step 214 and the displayed information in step 216. After recognition of that, the user may avoid communicating sensitive matters in order to prevent sensitive matters from being eavesdropped in the designated mode other than the privacy mode. Furthermore, in this state, if the user wants to communicate a sensitive matter immediately, the user may stop the communication in the designated mode other than the privacy mode and may move to another zone covered by another base station adopting the privacy mode and try a call origination operation once again, in order to communicate speech signals in the privacy mode.

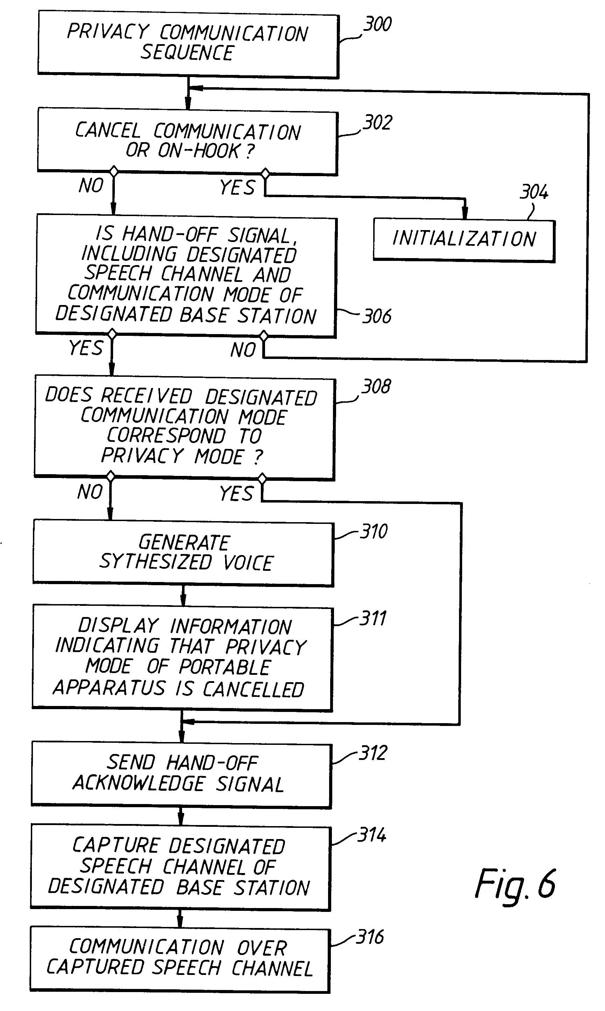

FIG. 6 shows the privacy mode communication sequence according to a second embodiment. It is noted that, referring again to FIG. 8, the portable apparatus PS1 communicates with the base station BS1 covering the zone E1. Referring to FIG. 6, while the portable apparatus PS1 communicates with the base station BS1 in the privacy mode (step 300), the control circuit 30 checks whether the privacy communication is cancelled or the user performs an on-hook operation (step 302). If the control circuit 30 determines that the privacy communication sequence is cancelled or the user performs an on-hook operation, the control circuit 30 performs an initialization operation (step 304). Otherwise, the control circuit 30 performs a subsequent operation.

Referring again to FIG. 8, if the portable apparatus PS1 moves from the zone E1 to the zone E2 covered by the base station BS2, the base station BS1 sends a signal referred to as a hand-off signal including a designated speech channel of the base station BS2 designated by the control station CS and a designated communication mode of the base station BS2.

Referring again to FIG. 6, if the portable apparatus PS1 does not receive the hand-off signal from the base station BS1 (step 306), the control circuit 30 performs the above steps 302, 304, and 306. If the portable apparatus receives the hand-off signal from the base station BS1, the control circuit 30 checks whether the received designated communication mode of the base station BS2 included in the hand-off signal corresponds to the privacy mode (step 308). If the received designated communication mode does not correspond to the privacy mode, the control circuit 30 generates a synthesized voice using the voice synthesizer 76 indicating that the privacy mode of the portable apparatus is cancelled (step 310). Thereafter, the control circuit 30 displays information indicating that the privacy mode of the portable apparatus is cancelled (step 311).

After the step 311, or if the received designated communication mode corresponds to the privacy mode in the step 308, the portable apparatus PS1 sends a hand-off acknowledge signal to the base station BS1 (step 312). After that, the control circuit 30 captures the designated speech channel of the designated base station BS2 (step 314). After that, the control circuit 30 communicates with the designated base station BS2 over the captured speech channels in the designated received mode (step 316).

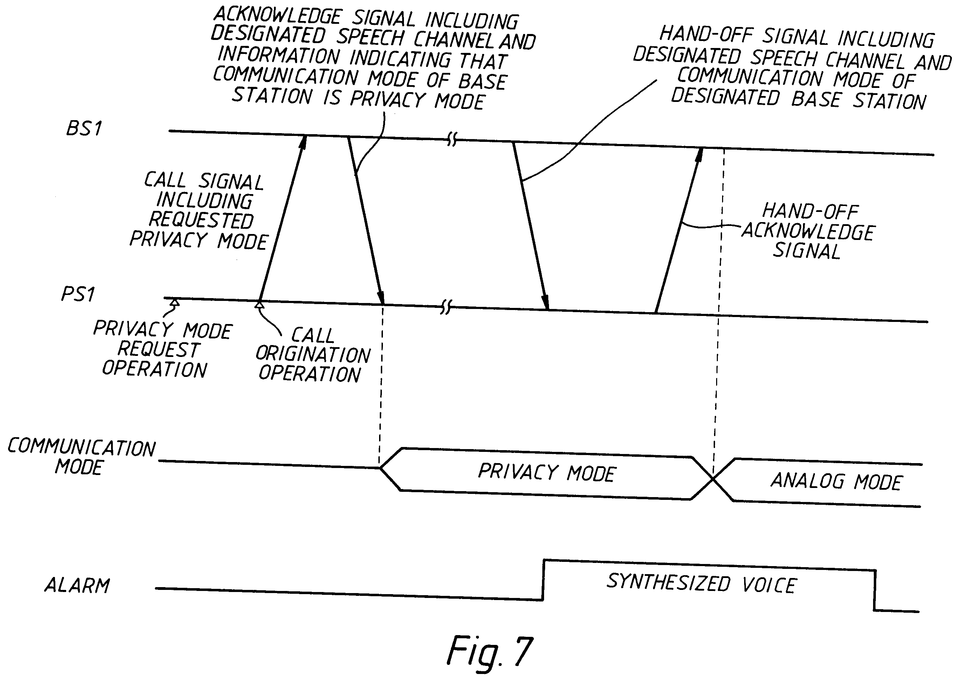

FIG. 7 shows a sequence between the portable apparatus PS1 and the base station BS1 according to the second embodiment.

In this case, it is noted that the base station BS1 adopts the privacy mode. If the user requests the privacy mode, the portable apparatus PS1 sends a call signal including the requested mode to the base station BS1. If the base station BS1 adopts the privacy mode, the base station BS1 sends an acknowledge signal including designated speech channels and information indicating that the communication mode of the base station BS1 is the privacy mode. In accordance with the acknowledge signal, the portable apparatus PS1 communicates with the base station BS1 in the privacy mode.

If the portable apparatus PS1 moves from the zone El covered by the base station BS1 to the zone E2 covered by the base station BS2 while communicating with the base station BS1 in the privacy mode, the base station BS1 sends the hand-off signal including the designated speech channels and the designated communication mode of the base station BS2 designated by the control station CS. If the communication mode of the base station BS2 is not the privacy mode, the control circuit 30 actuates the voice synthesizer 76. As a result, the voice synthesizer 76 generates the synthesized voice via the analog audio circuit 70 and the speaker 26 indicating that the privacy mode is cancelled.

After the portable apparatus PS1 sends the hand-off acknowledge signal to the base station BS1, the portable apparatus PS1 communicates with the base station BS2 in the designated received analog mode.

According to the second embodiment, the user recognizes that the privacy mode of the portable apparatus is changed to the designated communication mode other than the privacy mode in accordance with the generated synthesized voice and the displayed message. After recognition of that, the user may avoid communicating sensitive matters in order to prevent the sensitive matters from being eavesdropped in the designated mode other than the privacy mode. Furthermore, in this state, if the user wants to communicate the sensitive matters immediately, the user can stop the communication in the designated mode other than the privacy mode, move to another zone covered by another base station adopting the privacy mode and can try a call origination operation in order to communicate speech signals in the privacy mode. Furthermore, since the user hears the synthesized voice indicating that the privacy mode is cancelled in accordance with the generated synthesized voice, the user can recognize that the privacy mode is cancelled even if the user is absorbed in the communication.

Although in the first embodiment, the beep sound from the buzzer 78 is generated when the inputted mode is not adopted by the base station, a synthesized voice, including information indicating that the inputted mode is not adopted by the base station, may be generated by the voice synthesizer 76.

Although in the second embodiment, the synthesized voice is generated when the privacy mode is cancelled, a beep sound may be generated by the buzzer 78.

The foregoing description of preferred embodiments of the invention has been presented for purposes of illustration and description. It is not intended to be exhaustive or to limit the invention to the precise form disclosed, and modifications and variations are possible in light of the above teachings or may be acquired from practice of the invention. The embodiments were chosen and described in order to explain the principles of the invention and its practical application to enable one skilled in the art to utilize the invention in various embodiments and with various modifications as are suited to the particular use contemplated. It is intended that the scope of the invention be defined by the claims appended hereto, and their equivalents.

## Claims

1. A radio telecommunication apparatus used in a radio telecommunication system, wherein speech signals are selectively communicated with a base station in either one of a privacy mode or a communication mode other than the privacy mode characterized in that the radio telecommunication apparatus comprises:
requesting means (3) for requesting the base station to designate the privacy mode;
receiving means (21) for receiving a designated communication mode designated by the base station; and
warning means (5, 76, 78) responsive to the requesting means (3) and the receiving means (21) for warning the user of the apparatus if the received designated communication mode does not correspond to the requested privacy mode.

2. The apparatus of claim 1 characterized in that the requesting means (3, 15) comprises input means (3) for inputting a call origination request and a privacy mode request, and sending means (15) responsive to the input means (3) for sending a call signal including the inputted call origination request and the inputted privacy mode request.

3. The apparatus of claim 1 or 2 characterized in that the radio telecommunication apparatus further comprises mode assigning means (30) responsive to the receiving means (21) for assigning the received designated communication mode to a communication mode of the apparatus.

4. The apparatus claimed in any preceding claim characterized in that the warning means (5, 76, 78) comprises sound generating means (78) for generating sound.

5. The apparatus claimed in any preceding claim characterized in that the warning means (5, 76, 78) comprises informing means (5, 76) for informing the user of the apparatus that the requested privacy mode is not designated by the base station.

6. The apparatus of claim 5 characterized in that the informing means (5, 76) comprises displaying means (5) for displaying information indicating that the requested privacy mode is not designated by the base station.

7. The apparatus of claim 5 characterized in that the informing means (5, 76) comprises voice synthesis means (76) for generating a synthesized voice indicating that the requested privacy mode is not designated by the base station.

8. A radio telecommunication apparatus used in a radio telecommunication system, wherein speech signals are selectively communicated with a base station in either one of a privacy mode or a communication mode other than the privacy mode characterized in that the radio telecommunication apparatus comprises:
receiving means (21) for receiving a mode change indication signal including a designated communication mode from the base station while the speech signals are communicated with the base station in the privacy mode; and
warning means (5, 76, 78) responsive to the receiving means (21) for warning the user of the apparatus if the received designated communication mode does not correspond to the privacy mode of the apparatus.

9. The apparatus of claim 8 characterized in that the radio telecommunication apparatus further comprises mode change means (30) responsive to the receiving means for changing the privacy mode of the apparatus to the received designated communication mode if the received designated communication mode does not correspond to the privacy mode of the apparatus.

10. The apparatus of claim 8 or 9 characterized in that the alarming means (5, 76, 78) comprises sound generating means (5) for generating sound.

11. The apparatus of claim 8, 9 or 10 characterized in that the alarm means (5, 76, 78) comprises informing means (5, 76) for informing the user of the apparatus that the privacy mode of the apparatus is cancelled by the base station if the received designated communication mode does not correspond to the privacy mode of the apparatus.

12. The apparatus of claim 11 characterized in that the informing means (5, 76) comprises displaying means (5) for displaying information indicating that the privacy mode is cancelled.

13. The apparatus of claim 11 characterized in that the informing means (5, 76) comprises voice synthesis means (76) for generating a synthesized voice indicating that the privacy mode of the apparatus is cancelled.

14. A radio telecommunication apparatus used in a radio telecommunication system, wherein speech signals are selectively communicated with a first base station covering a first zone in either one of a privacy mode or a communication mode other than the privacy mode, and wherein the first base station sends a mode change indication signal including a communication mode of a second base station if the apparatus approaches a second zone covered by the second base station characterized in that the radio telecommunication apparatus comprises:
receiving means (21) for receiving the mode change indication signal including the communication mode of the second base station while the speech signals are communicated with the first base station in the privacy mode; and
warning means (5, 76, 78) responsive to the receiving means (21) for warning the user of the apparatus if the received sent communication mode of the second base station does not correspond to the privacy mode of the apparatus.

15. A method of warning the user of a radio telecommunication apparatus used in a radio telecommunication system, wherein speech signals are selectively communicated with a base station in either one of a privacy mode or a communication mode other than the privacy mode characterized in that the method comprises the steps of:
requesting the base station to designate the privacy mode;
receiving a designated communication mode designated by the base station; and
warning the user if the received designated communication mode does not correspond to the requested privacy mode.

16. A method of warning the user of a radio telecommunication apparatus used in a radio telecommunication system, wherein speech signals are selectively communicated with a base station in either one of a privacy mode or a communication mode other than the privacy mode characterized in that the method comprises the steps of:
receiving a mode change indication signal including a designated communication mode from the base station while the speech signals are communicated with the base station in the privacy mode; and
warning the user if the received designated communication mode does not correspond to the privacy mode of the apparatus.

17. A method of warning the user of a radio telecommunication apparatus used in a radio telecommunication system, wherein speech signals are selectively communicated with a first base station covering a first zone in either one of a privacy mode or a communication mode other than the privacy mode, and wherein the first base station sends a mode change indication signal including a communication mode of a second base station if the apparatus approaches a second zone covered by the second base station characterized in that the method comprises the steps of:
receiving the mode change indication signal including the communication mode of the second base station while the speech signals are communicated with the first base station in the privacy mode; and
warning the user if the received sent communication mode of the second base station does not correspond to the privacy mode of the apparatus.
